# FASCICULE DE BREVET EUROPEEN

(11) **EP 3 236 331 B1**
(45) Date de publication et mention de la délivrance du brevet: **19.10.2022**
(21) Numéro de dépôt: 17166966.6
(22) Date de dépôt: 19.04.2017
(51) Int. Cl.: G05D 1/00, G01S 13/90

(54) **PROCÉDÉ D'OPTIMISATION DE PRISES DE VUES RÉALISÉES PAR UN DISPOSITIF AÉROPORTÉ D'IMAGERIE RADAR, ET SYSTÈME DE MISSION METTANT EN OEUVRE UN TEL PROCÉDÉ**
VERFAHREN ZUR OPTIMIERUNG DER BILDAUFNAHMEN, DIE VON EINER FLIEGENDEN VORRICHTUNG ZUR RADARBILDERFASSUNG STAMMEN, UND EINSATZSYSTEM ZUR UMSETZUNG DIESES VERFAHRENS
METHOD FOR OPTIMISING IMAGES TAKEN BY AN AIRBORNE RADAR IMAGING DEVICE, AND MISSION SYSTEM IMPLEMENTING SUCH A METHOD

(30) Priorité: 22.04.2016 FR 1600668
(43) Date de publication de la demande: 25.10.2017
(73) Titulaire: THALES, 92400 Courbevoie (FR)
(72) Inventeur: CAMUS, Fabien, 33608 PESSAC Cedex (FR); RICHARD, Fabien, 33608 PESSAC Cedex (FR); GUERRINI, Gilles, 33608 PESSAC Cedex (FR); CORRETJA, Vincent, 33608 PESSAC Cedex (FR); SFEZ, Thierry, 33608 PESSAC Cedex (FR); MONTIGNY, Richard, 33608 PESSAC Cedex (FR)
(74) Mandataire: Atout PI Laplace

(56) Documents cités:
- FR-A1- 3 012 618
- US-A1- 2014 282 035
- US-B1- 7 589 662
- NAN WANG ET AL: "SAR sensor employment planning for tactical aircraft", COMPUTER AND AUTOMATION ENGINEERING (ICCAE), 26 février 2010 (2010-02-26), pages 603-608, XP031671056, 2010 THE 2ND INTERNATIONAL CONFERENCE ON, IEEE, PISCATAWAY, NJ, USA ISBN: 978-1-4244-5585-0
- LEAVITT C A ED - INSTITUTE OF ELECTRICAL AND ELECTRONICS ENGINEERS: "REAL-TIME IN-FLIGHT PLANNING", PROCEEDINGS OF THE IEEE 1996 NATIONAL AEROSPACE AND ELECTRONICS CONFERENCE (NAECON). DAYTON, MAY 20 - 23, 1996; [PROCEEDINGS OF THE IEEE NATIONAL AEROSPACE AND ELECTRONICS CONFERENCE (NAECON)], NEW YORK, IEEE, US, vol. 1, 20 mai 1996 (1996-05-20), pages 83-89, XP000868744, DOI: 10.1109/NAECON.1996.517620 ISBN: 978-0-7803-3307-9
- G. N. MAROON ET AL.: "Tactical Flight Management- Total mission capability", PROCEEDINGS / NATIONAL AEROSPACE ELECTRONICS CONFERENCE; INSTITUTE OF RADIO ENGINEERSPROCEEDINGS OF THE IEEE 1984 NATIONAL AEROSPACE AND ELECTRONICS CONFERENCE (NAECON). DAYTON, MA, 21 mai 1984 (1984-05-21), pages 496-502, XP001614174,
- PASTINA D ET AL: "Motion estimation and optimum time selection for ship ISAR imaging", PROCEEDINGS OF THE 2003 IEEE RADAR CONFERENCE. HUNTSVILLE, AL, MAY 5 - 8, 2003; [IEEE RADAR CONFERENCE], NEW YORK, NY : IEEE, US, 5 mai 2003 (2003-05-05), pages 7-14, XP010642632, DOI: 10.1109/NRC.2003.1203371 ISBN: 978-0-7803-7920-6
- David M. Panton ET AL: "Mission Planning for Synthetic Aperture Radar Surveillance", , 20 août 1998 (1998-08-20), pages 1-37, XP055321124, DOI: 10.1287/inte.29.2.73 Extrait de l'Internet: URL:http://miplib.zib.de/paper/pantonelber s1999_pp.ps.gz [extrait le 2016-11-21]
- C H SPENNY ET AL: "CLOSELY SUPERVISED CONTROL OF A TARGET-STEERED UAV", PROC. SPIE3840, TELEMANIPULATOR AND TELEPRESENCE TECHNOLOGIES VI, 8 novembre 1999 (1999-11-08), page 179, XP055321449, DOI: 10.1117/12.369279

## Description

La présente invention concerne un procédé d'optimisation de prises de vues réalisées par un dispositif aéroporté d'imagerie radar. Elle concerne également un système de mission de vol mettant en oeuvre un tel procédé.

Certains radars aéroportés comportent des modes d'imagerie permettant de représenter une zone ou un objet dans une certaine bande de fréquence.

En particulier, le mode d'imagerie SAR (Synthetic Aperture Radar) permet de réaliser une prise de vue d'une zone au sol ou d'un bateau et le mode d'imagerie ISAR (Inverse Synthetic Aperture Radar) permet une prise de vue de la superstructure d'un navire.

Dans ces deux modes, la qualité de l'image obtenue est fortement dépendante, entre autres, de la disposition relative du porteur du radar par rapport à la cible et de la vitesse de la cible. Par exemple, pour une prise de vue optimale en mode SAR, la cible doit se trouver dans une certaine direction par rapport au porteur durant la prise de vue.

D'une manière générale, pour avoir une image SAR le bateau ne doit pas bouger (pas ou peu de houle) alors qu'en ISAR il doit bouger (houle nécessaire).

A défaut d'assistance adaptée, le respect de ces contraintes de positionnement requiert une grande attention de la part du pilote du porteur ainsi qu'une solide expérience dans la réalisation de ces opérations.

Actuellement, les systèmes de mission embarqués fournissent au mieux au pilote des incitations basées sur la position courante du porteur et de la direction de la cible. Le pilote dispose donc d'indications sur le domaine dans lequel une prise d'image est possible.

Ce mode opératoire présente plusieurs inconvénients.

Premièrement, il ne permet pas d'anticiper la totalité de la procédure de prise de vue. Deuxièmement, il ne garantit pas un résultat optimal en terme de qualité d'image, étant donné que ces incitations ne peuvent être qu'approximatives.

Enfin, ce mode opératoire repose sur l'expérience et l'attention du pilote.

Un autre inconvénient réside également dans le fait que, les conditions de prise de vue variant, les images obtenues peuvent difficilement être utilisées dans un second temps pour alimenter un système de reconnaissance automatique des cibles.

Un but de l'invention est notamment de pallier ces inconvénients, en permettant une prise de vue radar optimale en mode SAR ou en mode ISAR. A cet effet, l'invention a pour objet un procédé d'optimisation de prises de vues réalisées par un dispositif d'imagerie radar aéroporté tel que décrit dans les revendications.

L'invention a également pour objet un système de mission de vol mettant en œuvre un tel procédé.

D'autres caractéristiques et avantages de l'invention apparaîtront à l'aide de la description qui suit, faite en regard de dessins annexés qui représentent :
- La figure 1, les différentes phases de calcul de trajectoire de vol utilisées par le procédé selon l'invention ;
- La figure 2, des exemples de trajectoires de vol calculées selon l'invention, pour optimiser la prise de vue des images de type SAR ;
- La figure 3, des exemples de trajectoires de vol calculées selon l'invention, pour optimiser la prise de vue des images de type ISAR ;
- La figure 4, les différentes étapes possibles pour la mise en œuvre du procédé selon l'invention.

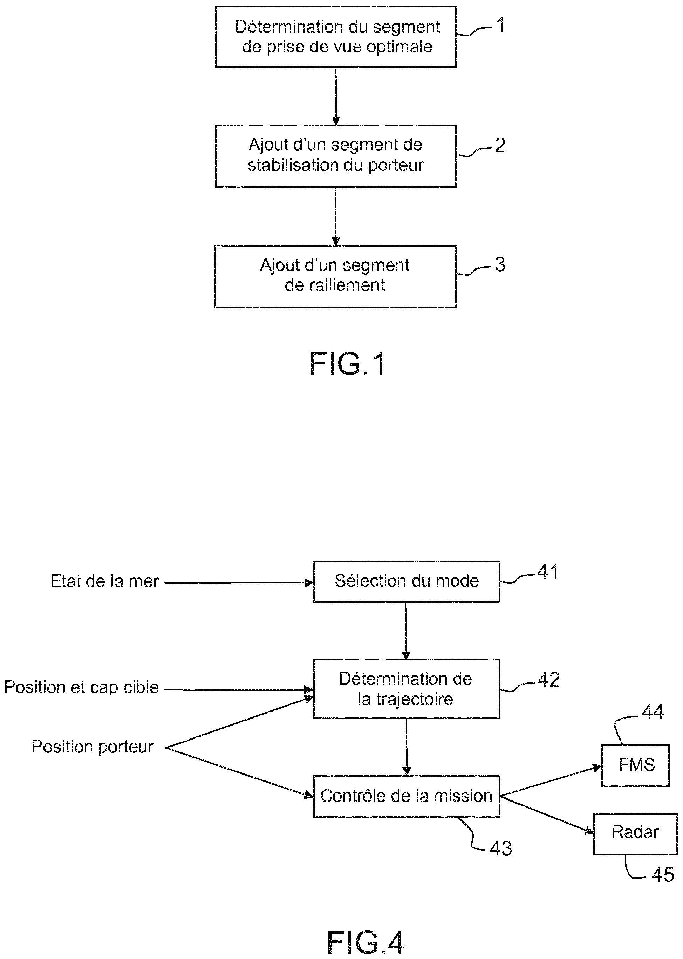

La figure 1 présente les différentes phases de calcul de trajectoire de vol utilisées par le procédé selon l'invention.

Le procédé selon l'invention conduit à l'obtention d'une trajectoire permettant de capturer la meilleure image SAR ou ISAR possible, compte-tenu des positions et des attitudes relatives du porteur du radar et de la cible.

On se place à une altitude constante, correspondant à l'altitude de croisière du véhicule pour la mission donnée, dans la zone d'opérations.

Le type d'image à réaliser est notamment déterminé en fonction de l'état de la mer. Dans un cas particulier de mise en oeuvre du procédé, si la mer est suffisamment calme dans la zone visée, le radar réalise une image SAR. Dans le cas contraire, il réalise une image ISAR.

Quel que soit le mode d'imagerie retenu, le plan de vol est déterminé en trois phases présentées en figure 1.

Dans une première phase 1, on détermine le segment de trajectoire de prise de vue optimale. La méthode de calcul de ce segment est décrite par la suite. Il s'agit du segment de plan de vol durant lequel la prise de vue par le radar est effectuée. Sa longueur est déterminée en fonction de la durée de prise de vue dans le mode considéré, augmentée d'une marge, et de la vitesse du porteur du radar, de façon à ce que, si la prise de vue est déclenchée à l'entrée de ce segment, le porteur n'en sorte pas avant la fin de la prise de vue.

Dans une deuxième phase 2, on ajoute un segment de stabilisation du porteur avant le segment de prise de vue. Ce segment de trajectoire se situe dans le prolongement du segment de prise de vue, et en amont de celui-ci sur le plan de vol calculé. Sa longueur est déterminée à l'aide du domaine de vol du porteur, de sorte que ce dernier puisse stabiliser son vol avant l'entrée dans le segment de prise de vue.

Dans une troisième phase 3, on ajoute par exemple un segment de ralliement avant le segment de stabilisation. Ce segment de trajectoire est calculé de façon à prendre en compte les contraintes de conditions de survie et de sécurité applicables dans la zone d'opérations concernée. Le calcul de ce segment de trajectoire prend notamment en compte une marge d'altitude par rapport au terrain, les menaces et les « no-fly » zones, d'autres paramètres pouvant être pris en compte en fonction du contexte opérationnel.

Ces trois phases 1, 2, 3 sont restituées et calculées par un système de mission qui calcule les différents segments.

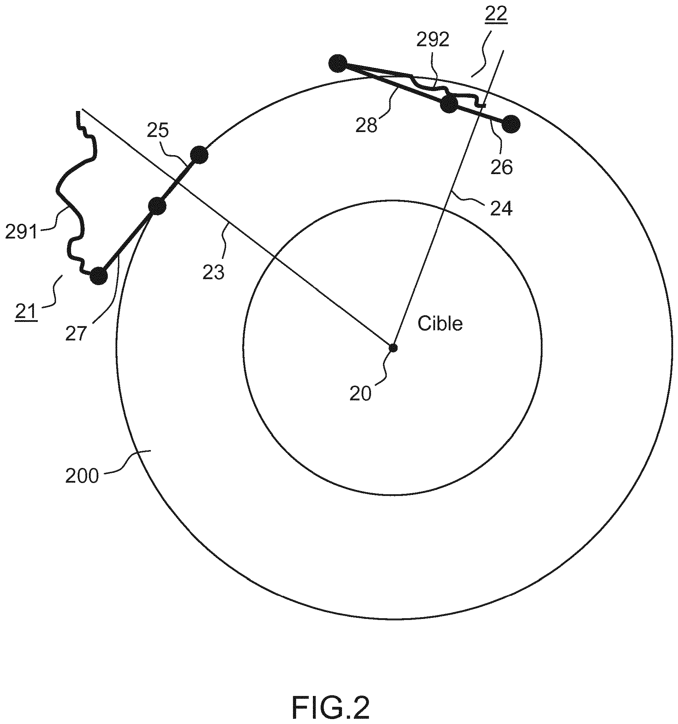

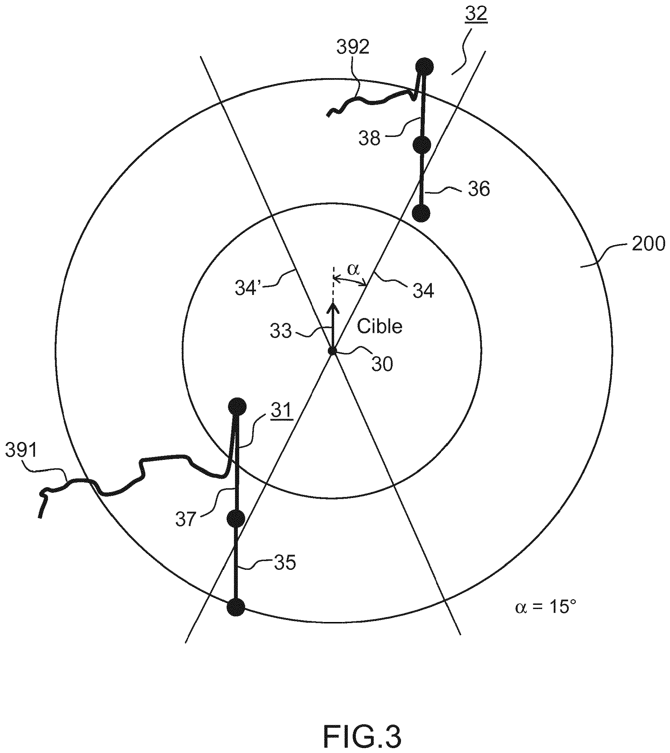

Quel que soit le mode d'imagerie utilisé, le radar est caractérisé par des portées minimales et maximales qui correspondent aux rayons minimal et maximal d'un anneau centré sur la cible dans lequel la prise de vue doit se faire. Les figures 2 et 3 illustrent ces anneaux, la figure 2 correspondant au mode SAR et la figure 3 correspondant au mode ISAR. Ces figures présentent à titre d'exemple deux porteurs d'un dispositif d'imagerie radar.

La figure 2 présente des exemples de calcul de trajectoires selon l'invention pour des prises de vue en mode SAR. Une première trajectoire 21 est associée à un premier porteur. Une deuxième trajectoire 22 est associée à un deuxième porteur.

Pour une prise de vue SAR optimale, l'antenne du radar doit être perpendiculaire à la droite 23, 24 reliant le porteur à la cible 20, le gisement d'antenne devant être de 90°. Dans la phase 1 de détermination du segment de prise de vue optimale, ce segment 25, 26 est donc calculé de façon à ce que :
- Il soit tangent à un cercle centré sur la cible 20 ;
- Son centre soit situé sur la ligne 23, 24 reliant le porteur à la cible ;
- Il soit intégralement inclus dans l'anneau 200 dans lequel la prise de vue est possible.

Une condition supplémentaire est par exemple qu'il soit le plus proche possible de la position initiale du porteur.

Une fois le segment de prise de vue optimale 25, 26 calculé, le segment 27, 28 de stabilisation du porteur est ajouté, dans le prolongement du segment de prise de vue. Puis le segment de ralliement 291, 292 est ajouté, finalisant ainsi la génération du plan de vol permettant une prise de vue radar optimale.

La figure 3 présente des exemples de calcul de trajectoires selon l'invention pour des prises de vue en mode ISAR. Une première trajectoire 31 est associée à un premier porteur. Une deuxième trajectoire 32 est associée à un deuxième porteur.

Pour une prise de vue ISAR optimale, l'antenne du radar doit être orientée dans une direction faisant un angle de 15° avec le vecteur vitesse de la cible 30, l'angle entre la direction de pointage de l'antenne radar et le vecteur vitesse 33 de la cible devant être de 15°. Le segment de prise de vue optimale 35, 36 est donc calculé de façon à ce que :
- Son centre soit situé sur l'une des deux droites 34, 34' orientées à 15° par rapport au cap de la cible ;
- Il soit intégralement inclus dans l'anneau 200 dans lequel la prise de vue est possible.

Une condition supplémentaire est par exemple qu'il soit le plus proche possible de la position initiale du porteur.

Une fois le segment de prise de vue optimale 35, 36 calculé, le segment 37, 38 de stabilisation du porteur est ajouté, dans le prolongement du segment de prise de vue. Puis le segment de ralliement 391, 392 est ajouté, finalisant ainsi la génération du plan de vol permettant une prise de vue radar optimale.

Comme indiqué précédemment, ces trajectoires sont calculées par le système de mission (ou le radar lui-même si les conditions suivantes sont disponibles). Les calculs des segments composant les trajectoires 21, 22, 31, 32 sont possibles car le système dispose des informations nécessaires :
- Position et cap de la cible à imager fournie par exemple par un opérateur ou déterminée dans les objectifs du plan de vol, cette cible pouvant être une zone au sol, un bateau ou une superstructure de navire par exemple ;
- Position du porteur ;
- Paramètres définissant l'anneau 200 de prise de vue ;
- Le contexte de la mission, par exemple l'état de la mer pour choisir le mode SAR ou le mode ISAR et calculer les trajectoires en conséquence.

Lorsque la trajectoire 21, 22, 31, 32 de prise de vue optimale est calculée, celle-ci peut être proposée au pilote.

Le suivi précis d'un plan de vol est une compétence de base pour un pilote d'avion de mission et ne nécessite pas de compétences spécifiques de la part du pilote.

Avantageusement, l'invention s'intègre facilement dans un système de mission automatisé, plus global, ce système apportant l'intégration de toutes les contraintes liées aux objectifs de mission dans un plan de vol.

Dans les exemples des figures 2 et 3, le segment de prise de vue est rectiligne. Selon le contexte et le type de capteur utilisé, ce segment pourrait ne pas être rectiligne. De même, le segment de stabilisation du porteur est rectiligne, mais une autre configuration est possible, l'essentiel étant qu'il prolonge le segment de prise de vue en amont du plan de vol.

La figure 4 illustre la chronologie du traitement effectué par le système de mission. L'algorithme de calcul du plan de vol dépend du mode d'image retenu : SAR ou ISAR et des performances du capteur utilisé.

La séquence des traitements est donc définie par la figure 4 :
- Dans une première étape 41, le mode d'imagerie est sélectionné en fonction du contexte, par exemple de l'état de la mer ;
- Dans une deuxième étape 42, la trajectoire 21, 22, 31, 32 est déterminée en fonction notamment de la position et du cap de la cible 20, 30 et de la position du porteur, cette trajectoire étant calculée selon les trois phases 1, 2, 3 décrites précédemment ;
- Dans une troisième étape 43, le contrôle de la mission est effectué sur la base du plan de vol calculé à l'étape précédente 42, en fonction de la position du porteur par rapport à la trajectoire calculée. Dans une procédure automatisée, ce contrôle consiste notamment à fournir la trajectoire calculée au système de gestion de vol FMS (« Flight Management System ») et à activer la fonction d'imagerie du radar, c'est-à-dire la prise de vue, en fonction de l'état d'avancement du porteur dans le plan de vol, et notamment de sa position par rapport au segment de prise de vue calculé. Plus précisément, les paramètres définissant la trajectoire sont transmis au FMS du porteur. Typiquement, la prise de vue est activée lorsque le porteur pénètre dans ce segment de prise de vue et désactivée lorsque le porteur le quitte, une marge pouvant être prévue pour couvrir les erreurs de positionnement. A cet effet, un ordre d'activation est envoyé au dispositif d'imagerie.

Il est possible, en supplément des traitements décrits précédemment, d'optimiser le plan de vol dans son ensemble de façon à en réduire la longueur globale ou la consommation de carburant du porteur tout en respectant le domaine de vol du porteur et les critères présentés ci-dessus.

Avantageusement, les plans de vol calculés selon le procédé selon l'invention permettent d'assurer que les prises de vue se font dans des conditions optimales. Le principe de calcul automatique de plan de vol permettant de standardiser les prises de vue, facilite notamment l'exploitation ultérieure des images.

## Revendications

1. Procédé d'optimisation de prises de vues réalisées par un dispositif d'imagerie radar aéroporté, ledit dispositif ayant pour mission de réaliser une image radar du type SAR d'une cible donnée (20), ledit procédé étant mis en œ uvre dans un système de mission de vol et comportante une étape (42) de calcul de la trajectoire (21, 22) du porteur dudit dispositif d'imagerie à partir de la position considérée dudit porteur, nommée position initiale et comprenant au moins :
- Une phase (1) de calcul d'un segment (25, 26,) de trajectoire pour la prise de vue, en fonction de la position de ladite cible et du type d'image à réaliser, ledit segment de prise de vue étant dédié à la prise de vue de ladite cible par ledit dispositif d'imagerie ; puis
- Une phase (2) d'ajout d'un segment (27, 28,) de trajectoire de stabilisation du porteur, situé en amont dans le prolongement dudit segment de prise de vue, pour la stabilisation du vol du porteur avant l'entrée dans le segment de prise de vue ; puis
- Une phase (3) d'ajout d'un segment (291, 292) de trajectoire de ralliement du porteur audit segment de stabilisation, ralliant le porteur, depuis sa position initiale, au segment de stabilisation ;
ledit segment pour la prise de vue (25, 26) étant calculé pour respecter au moins les caractéristiques suivantes :
- Il est tangent à un cercle centré sur ladite cible (20) ;
- Son centre est situé sur la ligne (23, 24) reliant ledit porteur, dans sa position initiale, à ladite cible ;
- Il est intégralement inclus dans un anneau (200) dans lequel la prise de vue par ledit dispositif d'imagerie est possible.

2. Procédé d'optimisation de prises de vues réalisées par un dispositif d'imagerie radar aéroporté, ledit dispositif ayant pour mission de réaliser une image radar de type ISAR d'une cible donnée (30), ledit procédé étant mis en œ uvre dans un système de mission de vol et comportante une étape (42) de calcul de la trajectoire (31, 32) du porteur dudit dispositif d'imagerie à partir de la position dudit porteur, nommée position initiale et comprenant au moins :
- Une phase (1) de calcul d'un segment (35, 36) de trajectoire pour la prise de vue, en fonction de la position de ladite cible et du type d'image à réaliser, ledit segment de prise de vue étant dédié à la prise de vue de ladite cible par ledit dispositif d'imagerie ; puis
- Une phase (2) d'ajout d'un segment (37, 38) de trajectoire de stabilisation du porteur, situé en amont dans le prolongement dudit segment de prise de vue, pour la stabilisation du vol du porteur avant l'entrée dans le segment de prise de vue ; puis
- Une phase (3) d'ajout d'un segment (391, 392) de trajectoire de ralliement du porteur audit segment de stabilisation, ralliant le porteur, depuis sa position initiale, au segment de stabilisation.
ledit segment pour la prise de vue (35, 36) étant calculer pour respecter au moins les caractéristiques suivantes :
- Son centre est situé sur l'une des deux droites (34, 34') orientées à sensiblement 15° par rapport au vecteur vitesse (33) de ladite cible ;
- Il est intégralement inclus dans un anneau (200) dans lequel la prise de vue par ledit dispositif d'imagerie est possible.

3. Procédé selon l'une quelconque des revendications précédentes, comportante une étape (41), précédent ladite étape (42) de détermination de trajectoire, dans laquelle le type d'image à réaliser est sélectionné entre type SAR et type ISAR en fonction du contexte de ladite mission.

4. Procédé selon la revendication 3, selon lequel ladite cible étant marine, le contexte est défini par l'état de la mer.

5. Procédé selon l'une quelconque des revendications précédentes, comportante une étape (43) suivant ladite étape (42) de calcul de trajectoire dans laquelle les paramètres définissant ladite trajectoire sont transmis au système de gestion de vol dudit porteur.

6. Procédé selon l'une quelconque des revendications précédentes, comportante une étape (43) suivant ladite étape (42) de calcul de trajectoire dans laquelle un ordre d'activation de la prise de vue est transmis audit dispositif d'imagerie en fonction de l'état d'avancement dudit porteur sur ladite trajectoire.

7. Système de mission de vol, apte à mettre en œuvre le procédé selon l'une quelconque des revendications précédentes.

## Patentansprüche

1. Verfahren zum Optimieren von von einem luftgestützten Radarabbildungsgerät gemachten Aufnahmen, wobei das Gerät die Aufgabe hat, ein Radarbild des SAR-Typs von einem gegebenen Ziel (20) zu erzeugen, wobei das Verfahren in einem Flugmissionssystem durchgeführt wird und einen ersten Schritt (42) des Berechnens der Flugbahn (21, 22) des Trägers des Abbildungsgeräts ausgehend von der betrachteten Position des Trägers, Anfangsposition genannt, beinhaltet und mindestens Folgendes beinhaltet:
- eine Phase (1) des Berechnens eines Flugbahnsegments (25, 26) für die Bildaufnahme in Abhängigkeit von der Position des Ziels und dem Typ des zu erzeugenden Bildes, wobei das Bildaufnahmesegment für die Aufnahme des Ziels durch das Abbildungsgerät bestimmt ist; dann
- eine Phase (2) des Hinzufügens eines Flugbahnsegments (27, 28) zum Stabilisieren des Trägers, das sich stromaufwärts in der Verlängerung des Bildaufnahmesegments befindet, um den Flug des Trägers vor dem Eintritt in das Bildaufnahmesegment zu stabilisieren; dann
- eine Phase (3) des Hinzufügens eines Flugbahnsegments (291, 292) zum Bringen des Trägers zu dem Stabilisierungssegment, so dass der Träger von seiner Ausgangsposition in das Stabilisierungssegment gebracht wird;
wobei das Bildaufnahmesegment (25, 26) so berechnet wird, dass es mindestens die folgenden Charakteristiken erfüllt:
- es ist tangential zu einem Kreis, der auf dem Ziel (20) zentriert ist;
- sein Zentrum liegt auf der Linie (23, 24), die den Träger in seiner Ausgangsposition mit dem Ziel verbindet;
- es ist integral in einem Ring (200) eingeschlossen, in dem die Bildaufnahme durch das Abbildungsgerät möglich ist.

2. Verfahren zum Optimieren von von einem Radarabbildungsgerät in einem Flugzeug gemachten Aufnahmen, wobei das Gerät die Aufgabe hat, ein Radarbild vom ISAR-Typ von einem gegebenen Ziel (30) zu erzeugen, wobei das Verfahren in einem Flugmissionssystem durchgeführt wird und einen Schritt (42) des Berechnens der Flugbahn (31, 32) des Trägers des Abbildungsgeräts ausgehend von der Position des Trägers, Anfangsposition genannt, beinhaltet und mindestens Folgendes beinhaltet:
- eine Phase (1) des Berechnens eines Flugbahnsegments (35, 36) für die Bildaufnahme in Abhängigkeit von der Position des Ziels und dem Typ des zu erzeugenden Bildes, wobei das Bildaufnahmesegment für die Aufnahme des Ziels durch das Abbildungsgerät bestimmt ist; dann
- eine Phase (2) des Hinzufügens eines Flugbahnsegments (37, 38) zum Stabilisieren des Trägers, das sich stromaufwärts in der Verlängerung des Bildaufnahmesegments befindet, um den Flug des Trägers vor dem Eintritt in das Bildaufnahmesegment zu stabilisieren; dann
- eine Phase (3) des Hinzufügens eines Flugbahnsegments (391, 392) zum Bringen des Trägers zu dem Stabilisierungssegment, so dass der Träger von seiner Ausgangsposition zu dem Stabilisierungssegment gebracht wird;
wobei das Bildaufnahmesegment (35, 36) so berechnet wird, dass es mindestens die folgenden Charakteristiken erfüllt:
- sein Zentrum liegt auf einer der beiden Geraden (34, 34'), die im Wesentlichen um 15° zum Geschwindigkeitsvektor (33) des Ziels orientiert sind;
- es ist integral in einen Ring (200) eingeschlossen, in dem die Aufnahme durch das Abbildungsgerät möglich ist.

3. Verfahren nach einem der vorherigen Ansprüche, das einen Schritt (41) beinhaltet, der dem Schritt (42) des Bestimmens der Flugbahn vorausgeht, in dem der zu erzeugende Bildtyp in Abhängigkeit vom Kontext der Mission zwischen dem SAR-Typ und dem ISAR-Typ ausgewählt wird.

4. Verfahren nach Anspruch 3, wobei das Ziel ein Meeresziel ist und der Kontext durch den Zustand des Meeres definiert ist.

5. Verfahren nach einem der vorherigen Ansprüche, das einen Schritt (43) beinhaltet, der auf den Schritt (42) des Berechnens der Flugbahn folgt, in dem die die Flugbahn definierenden Parameter zum Flugmanagementsystem des Trägers übertragen werden.

6. Verfahren nach einem der vorherigen Ansprüche, das einen Schritt (43) beinhaltet, der auf den Schritt (42) des Berechnens der Flugbahn folgt, in dem ein Befehl zum Aktivieren der Bildaufnahme zu dem Abbildungsgerät in Abhängigkeit vom Fortschritt des Trägers auf der Flugbahn übertragen wird.

7. Flugmissionssystem zur Durchführung des Verfahrens nach einem der vorherigen Ansprüche.

## Claims

1. A method for optimising image capturing carried out by an airborne radar imaging device, with the mission of said device being to produce an SAR-type radar image of a given target (20), said method being implemented in a flight mission system and having a step (42) of computing the trajectory (21, 22) of the carrier of said imaging device based on the considered position of said carrier, called initial position, and having at least:
- a phase (1) of computing a trajectory segment (25, 26) for image capturing, as a function of the position of said target and of the type of image to be produced, said image capturing segment being dedicated to the imaging device capturing an image of said target;
- a phase (2) of adding a trajectory segment (27, 28) for stabilising the carrier, located upstream in the extension of said image capturing segment, for stabilising the flight of the carrier before entering the image capturing segment; then
- a phase (3) of adding a trajectory segment (291, 292) for homing the carrier onto said stabilising segment, homing the carrier from its initial position to the stabilising segment;
said segment (25, 26) for image capturing being computed in order to comply with at least the following features:
- it is tangent to a circle centred on said target (20);
- its centre is located on the line (23, 24) connecting said carrier, in its initial position, to said target;
- it is fully integrated in a ring (200), in which image capturing by said imaging device is possible.

2. A method for optimising image capturing carried out by an airborne radar imaging device, with the mission of said device being to produce an ISAR-type radar image of a given target (30), said method being implemented in a flight mission system and having a step (42) of computing the trajectory (31, 32) of the carrier of said imaging device based on the position of said carrier, called initial position, and having at least:
- a phase (1) of computing a trajectory segment (35, 36) for image capturing, as a function of the position of said target and of the type of image to be produced, said image capturing segment being dedicated to the imaging device capturing an image of said target;
- a phase (2) of adding a trajectory segment (37, 38) for stabilising the carrier, located upstream in the extension of said image capturing segment, for stabilising the flight of the carrier before entering the image capturing segment; then
- a phase (3) of adding a trajectory segment (391, 392) for homing the carrier onto said stabilising segment, homing the carrier from its initial position to the stabilising segment;
said segment (35, 36) for image capturing being computed in order to comply with at least the following features:
- its centre is located on one of the two straight lines (34, 34') oriented at substantially 15° relative to the speed vector (33) of said target;
- it is fully integrated in a ring (200), in which image capturing by said imaging device is possible.

3. The method according to any one of the preceding claims, having a step (41), preceding said step (42) of determining the trajectory, in which the type of image to be produced is selected between an SAR-type and an ISAR-type image as a function of the context of said mission.

4. The method according to claim 3, wherein, with said target being a marine target, the context is defined by the sea conditions.

5. The method according to any one of the preceding claims, having a step (43), following said step (42) of computing the trajectory, in which the parameters defining said trajectory are transmitted to the flight management system of said carrier.

6. The method according to any one of the preceding claims, having a step (43), following said step (42) of computing the trajectory, in which an order for activating image capturing is transmitted to said imaging device as a function of the state of progress of said carrier on said trajectory.

7. A flight mission system, capable of implementing the method according to any one of the preceding claims.
